Europäisches Patentamt

European Patent Office

Office européen des brevets

(11) Veröffentlichungsnummer: **0 252 314**
**B1**

# (12) EUROPÄISCHE PATENTSCHRIFT

(45) Veröffentlichungstag der Patentschrift:
13.06.90

(21) Anmeldenummer: 87108247.5

(22) Anmeldetag: 06.06.87

(51) Int. Cl.⁵: **B60R 25/02**

(54) **Lenkschloss zum Sperren der Drehbewegung einer Kraftfahrzeug-Lenkspindel.**

(30) Priorität: 08.07.86 DE 3622904

(43) Veröffentlichungstag der Anmeldung:
13.01.88 Patentblatt 88/2

(45) Bekanntmachung des Hinweises auf die Patenterteilung:
13.06.90 Patentblatt 90/24

(84) Benannte Vertragsstaaten:
DE ES FR GB IT

(56) Entgegenhaltungen:
EP-A- 0 158 907
WO-A-83/03580
WO-A-83/04228
DE-B- 2 829 192
FR-A- 523 358
GB-A- 131 603

(73) Patentinhaber: VALEO NEIMAN, 12bis, rue Maurice
Berteaux, F-78290 CROISSY-SUR-SEINE(FR)

(72) Erfinder: Weber, Günter, Mittlere Bergerheide 54,
D-5600 Wuppertal 1(DE)
Erfinder: Leng, Michael, Austrasse 2,
D-6348 Herborn-Schönbach(DE)

(74) Vertreter: Patentanwaltsbüro Cohausz & Florack,
Postfach 14 01 20 Schumannstrasse 97,
D-4000 Düsseldorf 1(DE)

ACTORUM AG

## Beschreibung

Die Erfindung betrifft ein Lenkschloß zum Sperren der Drehbewegung einer Kraftfahrzeug-Lenkspindel mit mindestens zwei dicht oder in geringem Abstand nebeneinander in Führungen bewegbaren Sperriegeln, die in einer die Lenkspindel sperrenden Stellung mit einer vorderen stirnseitigen Fläche in eine Ausnehmung der Lenkspindel hineinreichen und in eine nicht sperrende Stellung in ihrer Längsrichtung von der Lenkspindel weg bewegbar sind.

Ein solches Lenkschloß ist aus der DE-A 3 333 648 bekannt. Bei diesem bekannten Lenkschloß kann es in Sonderfällen geschehen, daß durch Manipulationen Unbefugter oder durch extreme Erschütterungen die Sperriegel aus der sperrenden Stellung gelangen und damit die Lenkspindel frei geben. Dies wird dadurch unterstützt, daß die radialen Seitenflächen der Ausnehmungen der Lenkspindel, in die die Sperriegel in der sperrenden Stellung einliegen, auseinanderlaufen und die vorderen Seitenflächen der Sperriegel entsprechend schräg in einem Winkel verlaufen. Ist dieser Winkel zu steil, so ist beim Herausziehen der Sperriegel die Reibung zu hoch. Ist dieser Winkel zu flach, so besteht keine Selbsthemmung mehr, und ein gewaltsames Verdrehen der Lenksäule führt zu einem Herausdrücken der Sperriegel in die entsperrte Stellung.

Aufgabe der Erfindung ist es, ein Lenkschloß der eingangs genannten Art so zu verbessern, daß auch bei Manipulationen oder Erschütterungen die Sperriegel in der sperrenden Stellung sicher verbleiben.

Diese Aufgabe wird erfindungsgemäß dadurch gelöst, daß die jeweilige Führung so breit ist, daß der Sperriegel in dieser verkippbar ist und daß eine Seitenwand der Sperriegelführung einen Vorsprung oder Rücksprung aufweist, gegen den der Sperriegel mit einem Vorsprung oder einer Kante in der sperrenden und gekippten Stellung zur Sicherung der sperrenden Stellung anliegt.

Hierdurch bilden der Sperriegel und seine Führung ein einseitiges Formgesperre gegen eine Schubbewegung des Sperriegels aus der sperrenden Stellung heraus, so daß sichergestellt ist, daß allein durch den am Sperriegel angreifenden Mitnehmer der Sperriegel die sperrende Stellung verläßt und nicht durch Manipulationen oder Erschütterungen. Dieses Formgesperre sorgt somit dafür, daß bei abgezogenem Schlüssel die sperrende Lage des Sperriegels ohne ein Verschwenken bzw. Verkippen des Sperriegels nicht verlassen werden kann und dieses Verschwenken oder Verkippen wird allein durch den Mitnehmer erzeugt, der zusätzlich den Sperriegel von der sperrenden Stellung in die nicht sperrende Stellung verschiebt.

Diese Konstruktion bietet somit größte Sicherheit, daß der Sperriegel stets in seiner sperrenden Stellung verbleibt.

Besonders vorteilhaft ist es hierbei, wenn die vordere stirnseitige Fläche des Sperriegels, die in der Ausnehmung der Lenkspindel einliegt mit der Fläche die senkrecht zur Längsachse des Sperriegels ist, einen spitzen Winkel $\alpha$ bildet, wobei dieser Winkel $\alpha$ etwa dem Winkel $\beta$ entspricht, um den der Sperriegel von der entsperrten ungekippten Stellung in die gekippte sperrende Stellung schwenkt. Dieser Winkel sorgt dafür, daß bei einer Drehung der Lenkspindel die durch die Lenkspindelausnehmung auf den Sperriegel ausgeübte Schubkraft aufgrund des dort vorhandenen Keilgetriebes ein Verkippen bzw. Verschwenken des Sperriegels in die Stellung erzeugt, in der der Sperriegel am Vorsprung der Führung anliegt bzw. nicht weit davon entfernt ist und damit nicht in die verschwenkte Lage gelangen kann, in der er in die entsperrte Stellung verschiebbar ist. Hierbei kann der Winkel 1 bis 5 Grad, insbesondere 2 Grad betragen. Zusätzlich oder alternativ kann dies auch dadurch erreicht werden, daß am Sperriegel eine Feder anliegt, die den Sperriegel in die gekippte Stellung drückt.

Von Vorteil ist es, wenn der Sperriegel durch ein Mitnehmerteil von der sperrenden in die nicht sperrende Stellung bewegbar ist, wobei das Mitnehmerteil der Sperriegel von der gekippten in die nicht gekippte Stellung verschwenkbar ist. Hierbei kann das Mitnehmerteil eine verschwenkbare oder verschiebbare Platte sein, deren Drehachse etwa rechtwinklig zu den Seitenflächen des plattenförmigen Sperriegels ist.

Ein Ausführungsbeispiel der Erfindung ist in den Zeichnungen dargestellt und wird im folgenden näher beschrieben. Es zeigen:

Fig. 1 einen axialen Längsschnitt durch das Lenkschloß in sperrender Stellung der Sperriegel,

Fig. 2 einen Schnitt nach II-II in Figur 1 in entsperrter Stellung,

Fig. 3 einen Schnitt nach II-II in Figur 1 in sperrender Stellung.

Das Lenkschloß 1 weist ein rohrförmiges Schloßgehäuse 2 auf, in dem ein Schließzylindergehäuse 3 unverschieblich einliegt. Im Schließzylindergehäuse 3 ist ein Zuhaltungen aufweisender Zylinderkern 4 axial beweglich und um seine Achse verdrehbar angeordnet, der durch einen Schlüssel erst dann verschiebbar ist, wenn der Schlüssel eingesteckt wird. Am Zylinderkern 4 ist eine wellenförmige Verlängerung 6 koaxial befestigt, auf der eine im wesentlichen kreisförmige Kurven- oder Nockenscheibe 7 rechtwinklig und koaxial fest ist. Die Scheibe 7 weist über einen Drehwinkel von ca. 70 bis 90 Grad eine sektorförmige Ausnehmung 7a auf, in der eine Mitnehmerplatte 8 einschwenkt, wenn in der Sperrstellung des Zylinderkerns die Ausnehmung 7a der Mitnehmerplatte 8 gegenüberliegt.

Die Mitnehmerplatte 8 ist um eine zur Zylinderkernachse parallele Achse 9 aus der Ausnehmung 7a und damit aus der radialen Stellung zur Scheibe 7 herausschwenkbar und liegt danach auf dem teilkreisförmigen Umfang der Scheibe 7.

Die Sperriegel 13, 14 sind radial zur Lenkspindel 10 und mit ihren Seitenflächen parallel zur Lenkspindelachse nahe beieinander angeordnet. Sie liegen damit nicht rechtwinklig zur Verlängerung 6 sondern in einem Winkel von 5 bis 10 Grad. Die Sperriegel 13, 14 weisen an ihrer der Mitnehmerplatte 8 zugewandten Stirnseite jeweils eine Ausnehmung 13a, 14a auf, in die die Mitnehmerplatte 8 hineinreicht.

einreicht. Durch eine Bewegung der Platte 8 werden die Sperriegel in ihrer Längsrichtung radial zur Lenkspindel bewegt, wobei eine Bewegung aus der Sperrstellung von der Lenkspindel weg jeweils gegen den Druck eine Schraubendruckfeder 5 geschieht, die auf den der Lenkspindel gegenüberliegenden Seiten der Sperriegel anliegen. Die Mitnehmerplatte 8 kann auch verschieblich sein um die Sperriegel zu betätigen.

Auf der den Sperriegeln 13, 14 gegenüberliegenden Seite der Kurven- oder Nockenscheibe 7 liegt an der Scheibe 7 eine Ringscheibe 16 an, die durch eine konische Schraubendruckfeder gegen die Scheibe 7 gedrückt wird. Zwei Ringscheiben 16, 16a erzeugen die Sperrbereitschaftsstellung des Schlosses.

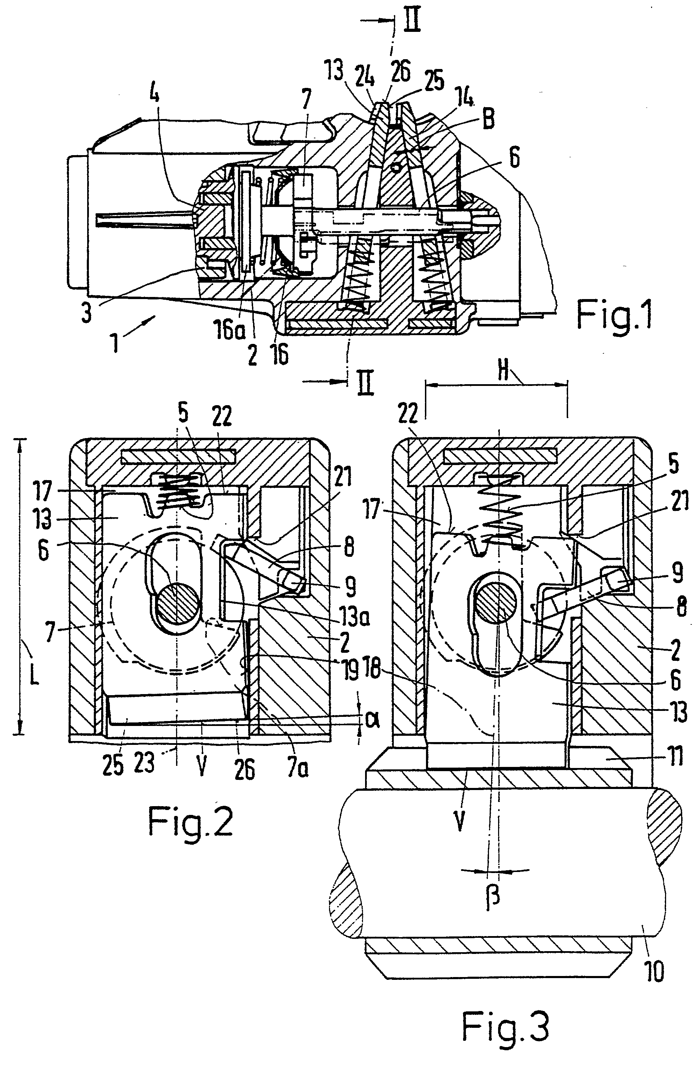

Die Sperriegel 13, 14 liegen jeweils in taschen- oder kammerförmigen Führungen 17 ein, die in Breite B und in ihrer Höhe H etwa der Breite und Höhe des jeweiligen Sperriegels entsprechen und deren Länge L größer ist als die Länge des Sperriegels. Innerhalb dieser Führungen 17 sind die Sperriegel 13, 14 in Richtung ihrer Längsachse 18 verschieblich. Befindet sich ein Sperriegel 13 in der in Figur 3 dargestellten sperrenden Stellung, so reicht das vordere Ende V des Sperriegels in eine Ausnehmung 11 der Lenkspindel 10 hinein. In dieser Stellung drückt die Feder 5 den Sperriegel an diejenige Seitenwand der Führung 17, die der Mitnehmerplatte 8 bzw. deren Achse 9 am nächsten ist und parallel zu dieser Achse liegt. Diese Seitenwand 19 bildet eine schräge Ausnehmung und damit einen stufenförmigen Vorsprung 21 der der Lenkspindel zugewandt ist. Hinter diesem Vorsprung 21 rastet der Sperriegel mit seiner der Lenkspindel abgewandten Seite bzw. Kante 22 ein, so daß diese Kante 22 es verhindert, daß der Sperriegel durch Manipulationen oder Erschütterungen in die entsperrte Stellung gegen den Druck der Feder 5 gelangen kann.

Vorsprung 21 und Kante 22 bilden damit ein einseitiges, d.h. in einer Schubrichtung wirkendes Formgesperre, das dadurch überwunden werden kann, daß die Mitnehmerplatte 8 den Sperriegel 13 nicht nur gegen die Wirkung der Feder 5 verschiebt, sondern gleichzeitig auch vom Vorsprung 21 weg um den Winkel β verschwenkt bzw. verkippt. Um sicherzustellen, daß der Sperriegel 13 stets in der sperrenden Stellung mit seiner Seitenfläche an der Seitenwand 19 der Führung zur Anlage gelangt, übt die Feder 5 einen Druck auf die Rückseite bzw. die Kante 22 des Sperriegels 13 aus, deren Richtung schräg zur Längsachse des Sperriegels in seiner entsperrten Stellung und zur Längsachse 23 der Führung 17 ist. Darüber hinaus wird eine Schrägstellung des Sperriegels 13 durch folgendes erreicht:

Das vordere Ende V des Sperriegels 13 weist nicht nur zwei Anflachungen 24, 25 und eine dazwischen befindliche stirnseitige Fläche 26 auf, sondern diese stirnseitige Fläche 26 als auch vorzugsweise die Anflachungen 24, 25 stehen nicht rechtwinklig zur Längsachse 18 des Sperriegels, sondern in einem Winkel α von etwa 1 bis 5, insbesondere 2 Grad, so daß ein sich Anlegen dieser Flächen an die Ausnehmung der Lenkradspindel zu einem Verkippen bzw. Verschwenken des Sperriegels führt, wobei dann die Kante 22 hinter den Vorsprung 21 gelangt. Damit ist auch sichergestellt, daß ein Verschieben des Sperriegels 13 aufgrund des Keilgetriebes zwischen der Ausnehmung der Lenkspindel und den Anflachungen 24, 25 nicht zu einer Bewegung des Sperriegels in die entsperrte Lage führt, da dies der Anschlag bzw. Vorsprung 21 verhindert.

## Patentansprüche

1. Lenkschloß zum Sperren der Drehbewegung einer Kraftfahrzeug-Lenkspindel mit mindestens zwei dicht oder in geringem Abstand nebeneinander in Führungen (17) bewegbaren Sperriegeln (13, 14), die in einer die Lenkspindel (10) sperrenden Stellung mit einer vorderen stirnseitigen Fläche (26) in eine Ausnehmung (11) der Lenkspindel hineinreichen und in eine nicht sperrende Stellung in ihrer Längsrichtung von der Lenkspindel weg bewegbar sind, dadurch gekennzeichnet, daß die jeweilige Führung (17) so breit ist, daß der Sperriegel (13, 14) in dieser verkippbar ist und daß eine Seitenwand (19) der Sperriegelführung (17) einen Vorsprung (21) oder Rücksprung aufweist, gegen den der Sperriegel (13, 14) mit einem Vorsprung oder einer Kante (22) in der sperrenden und gekippten Stellung zur Sicherung der sperrenden Stellung anliegt.

2. Lenkschloß nach Anspruch 1, dadurch gekennzeichnet, daß die vordere stirnseitige Fläche (V) des Sperriegels (13, 14), die in der Ausnehmung der Lenkspindel (10) einliegt, mit einer Fläche, die senkrecht zur Längsachse (18) des Sperriegels ist, einen spitzen Winkel (α) bildet, wobei dieser Winkel (α) etwa einem Winkel (β) entspricht, um den der Sperriegel (13, 14) von der entsperrten ungekippten Stellung in die gekippte sperrende Stellung schwenkt.

3. Lenkschloß nach Anspruch 2, dadurch gekennzeichnet, daß der Winkel (α) 1 bis 5 Grad, insbesondere 2 Grad beträgt.

4. Lenkschloß nach einem der vorherigen Ansprüche, dadurch gekennzeichnet, daß am Sperriegel (13, 14) eine Feder (5) anliegt, die den Sperriegel in die gekippte Stellung drückt.

5. Lenkschloß nach einem der vorherigen Ansprüche, dadurch gekennzeichnet, daß der Sperriegel (13, 14) durch ein Mitnehmerteil (8) von der sperrenden in die nicht sperrende Stellung bewegbar ist, wobei durch das Mitnehmerteil der Sperriegel von der gekippten in die nicht gekippte Stellung verschwenkbar ist.

6. Lenkschloß nach Anspruch 5, dadurch gekennzeichnet, daß das Mitnehmerteil (8) eine verschwenkbare oder verschiebbare Platte ist, deren Drehachse (9) etwa rechtwinklig zu den Seitenflächen des plattenförmigen Sperriegels (13, 14) ist.

7. Lenkschloß nach einem der Ansprüche 4 bis 6, dadurch gekennzeichnet, daß die Feder (5) in beiden Stellungen des Sperriegels (13, 14) mit ihrer Wirkachse schräg zur Längsachse (18) des Sperriegels liegt.

## Revendications

1. Antivol pour le blocage du mouvement de rotation de la colonne de direction d'un véhicule automobile comportant au moins deux verrous (13, 14) adjacents ou faiblement écartés l'un de l'autre, mobiles dans des glissières (17) qui, dans une position de blocage de la colonne de direction (10), pénètrent sur un embout frontal (26) dans un évidement (11) de la colonne de direction et, dans une position de déblocage, peuvent être écartés de la colonne de direction selon leur sens longitudinal, caractérisé en ce que chaque glissière (17) a une largeur telle que le verrou (13, 14) puisse y basculer et qu'une face latérale (19) de la glissière (17) présente une saillie ou un épaulement (21) contre lequel vient buter le verrou (13, 14) avec une saillie ou une arête (22), en position de blocage et basculement pour assurer la sécurité de la position de blocage.

2. Antivol selon la revendication 1, caractérisé en ce que l'embout avant (V) du verrou (13, 14) qui pénètre dans l'évidement de la colonne de direction (10), forme avec une face perpendiculaire à l'axe longitudinal (18) du verrou, un angle aigu (α), cet angle (α) correspondant environ à un angle (β) de basculement du verrou (13, 14) de la position de déblocage non basculée en position de blocage basculée.

3. Antivol selon la revendication 2, caractérisé en ce que l'angle (α) a une valeur comprise entre 1 et 5 degrés, de préférence 2 degrés.

4. Antivol selon l'une des revendications précédentes, caractérisé en ce qu'un ressort (5) est associé au verrou (13, 14) qui le pousse vers la position de basculement.

5. Antivol selon l'une des revendications précédentes, caractérisé en ce que le verrou (13, 14) est déplaçable au moyen d'un élément d'entraînement (8) de la position de blocage à la position de déblocage dans lequel le verrou est déplaçable de la position basculée à la position non basculée au moyen de l'élément d'entraînement.

6. Antivol selon la revendication 5, caractérisé en ce que l'élément d'entraînement (8) est un disque pivotant ou coulissant dont l'axe de rotation (9) est sensiblement perpendiculaire aux faces latérales du verrou en forme de plaque (13, 14).

7. Antivol selon l'une des revendications 4 à 6, caractérisé en ce que, dans les deux positions du verrou (13, 14), l'axe d'action du ressort (5) est incliné par rapport à l'axe longitudinal (18) du verrou.

## Claims

1. A steering lock for preventing the rotational movement of the steering column of a motor vehicle, comprising at least two locking bolts (13, 14) which are movable in guideways (17) and which are closely adjacent or separated by a small distance from one another, and which in one position which locks the steering column (10) project into a recess (11) in the steering column by means of a surface region (26) at the forward end of the bolt, and which can be moved away from the steering column in their longitudinal direction into a non-locking position, characterized in that the respective guideway (17) is of such a width that the locking bolt (13, 14) can be tilted over in it, and in that a sidewall (19) of the guideway (17) for the bolt comprises a projection (21) or a recess against which the locking bolt (13, 14) bears by means of a projection or an edge (22) when in the locking and tilted position so as to secure the locking position.

2. A steering lock according to Claim 1, characterized in that the surface region (26) at the forward end of the locking bolt (13, 14) which fits in the recess in the steering column (10) forms an apical angle (α) with a surface which is perpendicular to the longitudinal axis (18) of the locking bolt, where this angle (α) is approximately equal to an angle (β) about which the locking bolt (13, 14) pivots from the unlocked non-tilted position into the tilted locking position.

3. A steering lock according to Claim 2, characterized in that the angle (α) is 1 to 5 degrees, and especially 2 degrees.

4. A steering lock according to any one of the preceding Claims, characterized in that a spring (5) bears on the locking bolt (13, 14), which spring pushes the locking bolt into the tilted position.

5. A steering lock according to any one of the preceding Claims, characterized in that the locking bolt (13, 14) can be moved from the locking into the non-locking position by means of a carrier element (8), whereby the locking bolt can be tipped over from the tilted into the non-tilted position by means of the carrier element.

6. A steering lock according to Claim 5, characterized in that the carrier element (8) is pivotable or displaceable plate, the axis of rotation (9) of which is substantially perpendicular plate, the axis of rotation (9) of which is substantially perpendicular to the lateral surfaces of the plate-shaped locking bolt (13, 14).

7. A steering lock according to any one of Claims 4 to 6, characterized in that in both positions of the locking bolt (13, 14) the spring (5) is disposed with its axis along which it acts inclined to the longitudinal axis (18) of the locking bolt.

Fig.1

Fig.2

Fig.3